# EUROPEAN PATENT APPLICATION

(11) **EP 4 699 680 A1**
(43) Date of publication of application: **25.02.2026**
(21) Application number: 25197016.6
(22) Date of filing: 20.08.2025
(51) Int. Cl.: B01D 45/14, B01D 46/00, B01D 46/24, B01D 50/20

(54) **RADIAL FLOW MID-PRESSURE WATER SEPARATION FOR ENVIRONMENTAL CONTROL SYSTEM**

(30) Priority: 20.08.2024 US 202418809739
(71) Applicant: Hamilton Sundstrand Corporation, Charlotte, NC 28217-4578 (US)
(72) Inventor: SALTZMAN, David, Glastonbury, 06033 (US); KRAUTH, Kayla, Weatogue, CT, 06089 (US); BOSWORTH, Alexander, Simsbury, CT (US); IWASINSKI, Miles, Chicopee, MA, 01020 (US); BRUNO, Louis J., Ellington, 06029 (US)
(74) Representative: Dehns

(57) **Abstract**

A water separator for use in an environmental control system includes an insert (40) having an open first end (44), a closed second end (48), and at least one sidewall (48) extending between the first end and the second end such that a hollow interior (50) is defined between the first end, the second end, and the at least one sidewall. The at least one sidewall includes at least one flow passage (60) such that a flow of medium is configured to flow radially from the interior of the insert through the at least one sidewall.

## Description

### BACKGROUND

Embodiments of the present disclosure relate to environmental control systems for a vehicle, and more particularly, to a water extractor suitable for use in an environmental control system of an aircraft.

A water extractor may be provided within an environmental control system to capture or remove free moisture from an airflow. The water collector may include a separation device that directs the moisture present within the airflow to outer walls of the separation device and direct the free moisture towards a drain port. Often times the water extractor may be substantially bulky and consume large amounts of space. Further, in environmental control systems having multiple water extractors, each water extractor is fluidly coupled to a different component of outlet.

### BRIEF DESCRIPTION

According to one aspect, a water separator for use in an environmental control system includes an insert having an open first end, a closed second end, and at least one sidewall extending between the first end and the second end such that a hollow interior is defined between the first end, the second end, and the at least one sidewall. The at least one sidewall includes at least one flow passage such that a flow of medium is configured to flow radially from the interior of the insert through the at least one sidewall.

In embodiments, the at least one sidewall is formed from a condensing material.

In embodiments, the condensing material includes a plurality of wires.

In embodiments, the condensing material includes at least one layer of a screen-like material.

In embodiments, the at least one flow passage includes a plurality of discrete flow passages extending between the interior of the insert and an exterior of the insert.

In embodiments, the plurality of discrete flow passages are formed by a plurality of vanes.

In embodiments, the insert has a longitudinal axis and the plurality of vanes includes at least one of a radial vane extending between the interior and the exterior of the insert and at least one longitudinal vane extending between the first end and the second end of the insert.

In embodiments, a cross-sectional area of at least one flow passage of the plurality of discrete flow passages varies over a length of the at least one flow passage.

In embodiments, a cross-sectional area of at least one flow passage of the plurality of discrete flow passages is constant over a length of the at least one flow passage.

In embodiments, each of the plurality of discrete flow passages has an inlet and an outlet. The inlet of at least one of the plurality of discrete flow passages is radially aligned with the outlet of the at least one of the plurality of discrete flow passages.

In embodiments, each of the plurality of discrete flow passages has an inlet and an outlet. The inlet of at least one of the plurality of discrete flow passages and the outlet of the at least one of the plurality of discrete flow passages are separated by a rotational offset.

In embodiments, a direction of the rotational offset of the at least one flow passage about a longitudinal axis of the insert and a direction of a spin of the flow of medium provided to the first end of the insert is the same.

In embodiments, a direction of the rotational offset of the at least one flow passage about a longitudinal axis of the insert and a direction of a spin of the flow of medium provided to the first end of the insert is different.

In embodiments, the second end of the insert includes an end wall having an outer diameter equal to an outer diameter of the at least one sidewall.

In embodiments the end wall has a sloped configuration to direct the flow of medium within the interior radially outwardly toward the at least one sidewall.

In embodiments, the end wall includes a conical section, the conical section extending into the interior of the insert, wherein a narrow end of the conical section is positioned closest to the first end of the insert.

In embodiments, the insert is mounted within a duct.

In embodiments, the duct includes a first portion having a first diameter and a second portion having a second diameter. The second diameter is larger than the first diameter and the insert is arranged within the second portion.

In embodiments, an outer diameter of the insert is greater than the first diameter.

In embodiments the insert has a longitudinal axis extending between the first end and the second end and the insert is rotatable about the longitudinal axis.

### BRIEF DESCRIPTION OF THE DRAWINGS

The following descriptions should not be considered limiting in any way. With reference to the accompanying drawings, like elements are numbered alike:
FIG. 1 is a schematic diagram of a portion of an environmental control system according to an embodiment;
FIG. 2 is a cross-sectional view of a water extractor according to an embodiment;
FIG. 3 is a cross-sectional view of a water extractor according to an embodiment;
FIG. 4A is a front perspective view of a condensing material of an insert of a water separator according to an embodiment;
FIG. 4B is a front perspective view of another condensing material of an insert of a water separator according to an embodiment;
FIG. 5 is a perspective view of an insert of a water separator according to another embodiment;
FIG. 6 is a cross-sectional view of the water extractor of FIG. 5 taken along a central longitudinal plane 6-6 of FIG. 5 to an embodiment;
FIG. 7A is a cross-sectional view of the water extractor of FIG. 5 taken along line 7-7 of FIG. 6 oriented perpendicular to the longitudinal axis according to an embodiment;
FIG. 7B is a cross-sectional view of the water extractor of FIG. 5 taken along line 7-7 of FIG. 6 oriented perpendicular to the longitudinal axis according to another embodiment;
FIG. 8 is a perspective view of an insert rotatable about its longitudinal axis according to an embodiment; and
FIG. 9 is a cross-sectional view of a water extractor according to an embodiment.

### DETAILED DESCRIPTION

A detailed description of one or more embodiments of the disclosed apparatus and method are presented herein by way of exemplification and not limitation with reference to the Figures.

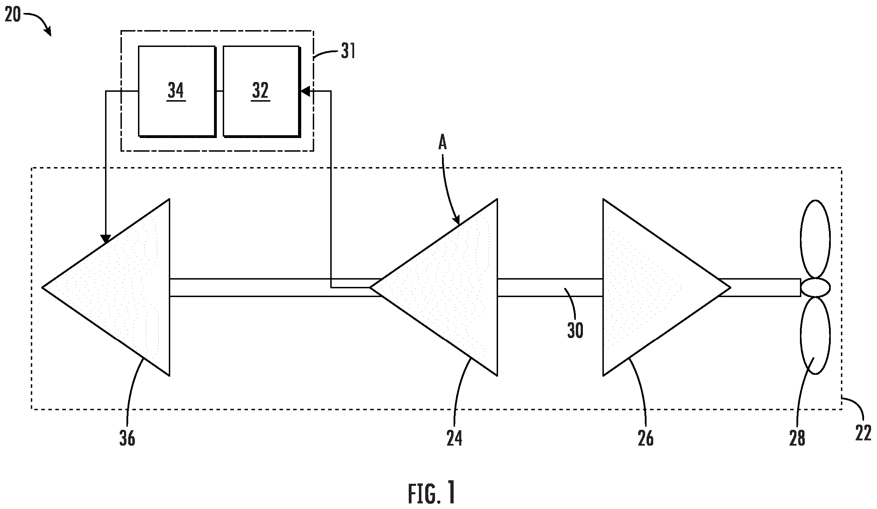

With reference now to the FIG. 1, an exemplary portion of an environmental control system 20, such as part of a pack of an environmental control system for example, is illustrated. As shown, the environmental control system (ECS) 20 includes an air cycle machine 22 having a turbine 24, and in some embodiments includes one or more other components, such as a compressor 26 and a fan 28 operably coupled to the turbine 24 by a rotatable shaft 30 for example. In an embodiment, the same flow of medium is provided to the compressor 26 and the turbine 24 in series. Accordingly, the medium may be at its highest pressure when output from the compressor 26 until reaching the inlet of the turbine 24 and may be a medium or midpressure when output from the outlet of the turbine 24.

In the illustrated, non-limiting embodiment, a water extractor 31 is arranged directly downstream from the outlet of the turbine 24, such as when the medium is at a middle pressure. As shown, the water extractor 31 may include a water separator 32 and a water collector 34 arranged in series relative to a flow of medium, with the water collector being arranged downstream form the water separator 32. The water separator 32 may be used to remove moisture, such as water for example, from the medium and the water collector 34 is operable to collect the removed moisture such that the medium output from the water collector 34 is drier than the medium provided to the water separator 32. Although the water separator 32 and the water collector 34 are schematically illustrated as separate components, it should be appreciated that embodiments where the two are integrally formed are within the scope of the disclosure. In the illustrated, non-limiting embodiment, the cool, dry medium output from the water collector 34 is provided to a second turbine 36. Although the second turbine 36 is illustrated as being arranged directly downstream from the water collector 34, it should be appreciated that in other embodiments, one or more additional components may be arranged between the outlet of the water collector 34 and the second turbine 36. Further, although the turbine 36 is illustrated as being part of the air cycle machine 22, embodiments where the turbine 36 is separate from the air cycle machine 22 are also within the scope of the disclosure.

It should be appreciated that the configuration of a portion of the environmental control system 20 described herein is intended as an example only and that an environmental control system having any suitable configuration is within the scope of the disclosure. Further, it should be understood that embodiments where the water separator 32 and water collector 34, in combination, are arranged downstream from any suitable component of the ECS 20 are also contemplated herein. In an embodiment, the water separator 32 is positioned within the ECS 20 to receive a flow of medium, such as a fluid or air A for example, that is cool and has condensed water vapor entrained or suspended therein resulting in a fog-like consistency.

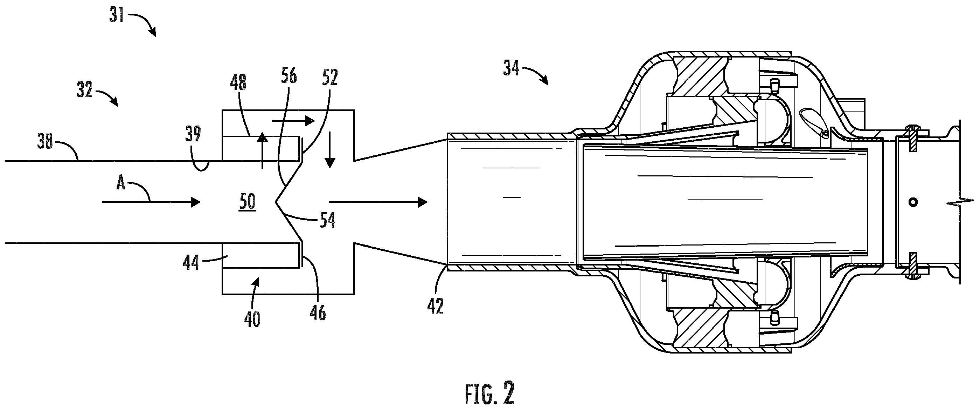

With reference now to FIG. 2, an example of water extractor 31 suitable for use in an ECS 20 is illustrated in more detail. In the illustrated, non-limiting embodiment, the water separator 32 includes an insert 40 positionable within a duct or conduit 38 connected to a component of an environmental control system. The insert 40 may be arranged within the duct 38 at any suitable location, such as downstream from an outlet of the turbine 24 and upstream from the inlet 40 of the water collector 34. In embodiments where the water separator 32 includes an insert, the insert 40 may be permanently or removably mountable within the interior of the duct 38, and/or to a portion of the turbine 24. Alternatively, the insert 40 may be integrally formed with the duct 38 or the outlet of the turbine 24, such as via an additive manufacturing process for example.

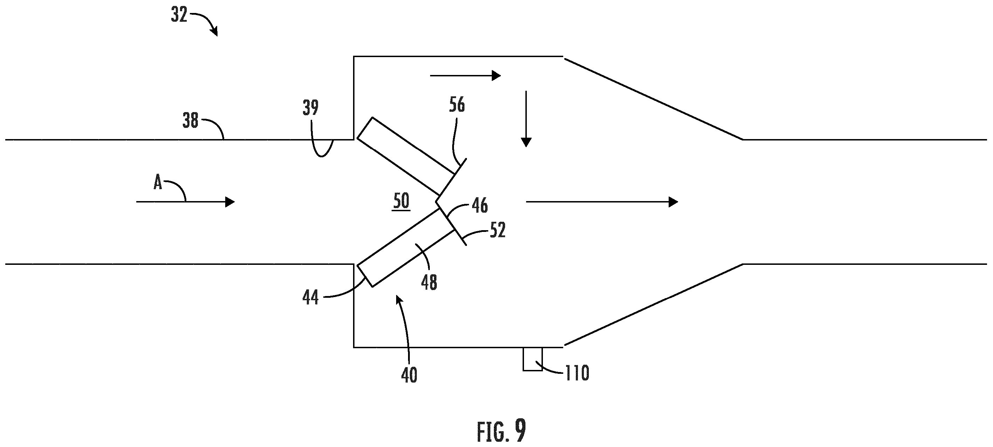

In an embodiment, the shape of the exterior of the insert 40 is identical to the shape of the interior surface 39 of the duct 38 at the location of the insert 40. In the illustrated, non-limiting embodiments of FIGS. 2-8, the insert 40 has a body that is generally cylindrical in shape. However, it should be understood that embodiments where a cross-section of the insert 40 is a shape other than a circle, such as a square, rectangle, triangle, or other suitable shape are also contemplated herein. For example, the insert 40 illustrated in FIG. 9 has a generally conical shape. In the illustrated, non-limiting embodiment, the insert 40 is arranged such that an outer diameter of the insert 40 decreases in the direction of flow A. However, embodiments were the insert 40 is arranged such that the diameter increases in the direction of flow A are also within the scope of the disclosure.

A maximum outer diameter of the insert 40 may be equal to or greater than an axial length of the insert 40, measured along a longitudinal axis X. Further, the maximum outer diameter of the insert 40 may be smaller than the interior diameter of the duct 38 such that a radial clearance extends therebetween. It should be appreciated that the duct 38 may but need not have a uniform interior diameter. For example, in the illustrated, non-limiting embodiment of FIGS. 2, 3, and 9, a first portion of the duct 38 has a first diameter at a location upstream from the insert 40 and a second portion of the duct 38 has a second diameter at the insert 40, the second diameter being greater than the first diameter. Further, in an embodiment, the outer diameter of the insert 40 may be greater than the first diameter.

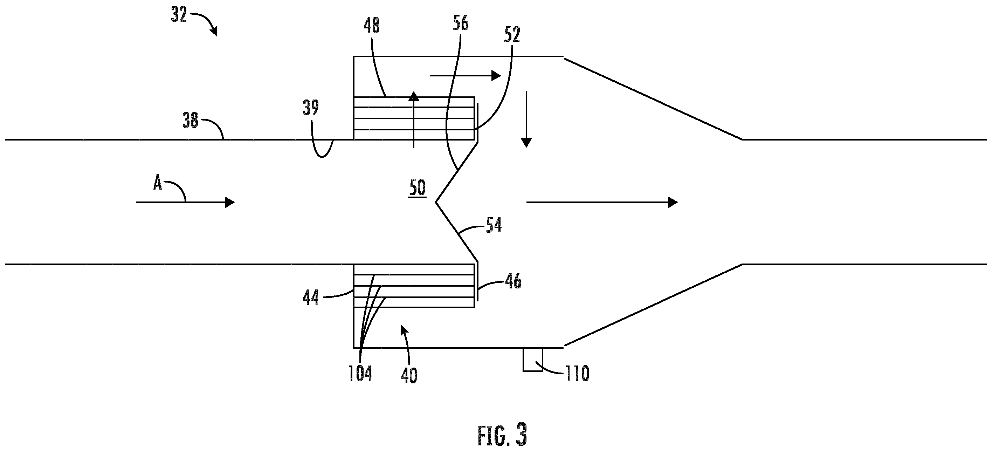

As shown, the insert 40 may have an open first end 44, a closed second end 46, and at least one sidewall 48 extending therebetween to define a hollow interior 50 of the insert 40. In embodiments where the insert 40 has a curved cross-sectional shape, the at least one sidewall 48 may be a single continuous sidewall. However, embodiments including a plurality of separate and distinct sidewalls are also contemplated herein. The closed second end 46 may include a solid end wall 52 (see FIGS. 2 and 3) having an outer diameter equal to an outer diameter of the sidewall 48. The at least one sidewall 48 is designed such that a fluid is configured to flow therethrough. Accordingly, a flow of a medium, such as medium A for example, provided to the interior 50 of the insert 40 cannot pass through the second end 46 and as a result flows radially outwardly through one or more flow passages formed in the at least one sidewall 48.

In some embodiments, the surface of the end wall 52 facing the interior 50 of the insert 40 has a generally planar configuration. However, in other embodiments, the surface of the end wall 52 facing the interior 50 of the insert 40 may have a non-planar configuration, such as a sloped or angled configuration. In the illustrated, non-limiting embodiment of FIGS. 2 and 3, the end wall 52 includes a conical section 54 arranged at a substantial center thereof. However, in the non-limiting embodiment of FIG. 9, the substantial entirety of the end wall 52 may be considered a conical section. As shown, the conical section 54 may extend into the interior 50 of the insert 40 such that the conical section 54 is in overlapping arrangement with the sidewall 48 over at least a portion of an axial length of the insert 40. The conical section 54 may be arranged such that the pointed or narrow end thereof is positioned closest to the first end 44 of the insert 40 or the inlet of the duct 38 and the walls 56 of the conical section slope radially outwardly in a direction away from the first end of the conical section 54, toward the at least one sidewall 48. In the illustrated, non-limiting embodiment, the outer diameter of the conical section 54 at the second end 46 of the insert 40 is generally equal to the inner diameter of the at least one sidewall 48. Accordingly, as the axial flow of the medium A within the insert 40 impinges on the sloped surfaces 56 of the conical section 54, the flow is deflected in a substantially perpendicular direction, toward an interior surface of the sidewall 48.

As noted, the one or more sidewalls 48 are configured such that the flow of medium A is able to flow therethrough. In an embodiment, the one or more sidewalls 48 of the insert 40 are formed from a condensing material. In an embodiment, a flow of air moving through the condensing material may have a generally linear or axial configuration oriented generally perpendicular to the longitudinal axis of the insert. However, embodiments where the flow path of the medium A has another configuration through the condensing material are also contemplated herein. The condensing material may be made from any of a variety of materials. Examples of suitable materials include, but are not limited to steel, steel alloys, copper, aluminum, other metals or metal alloys, composites, nylon, polyester, rayon, or another suitable polymer or plastic material, or any combination thereof.

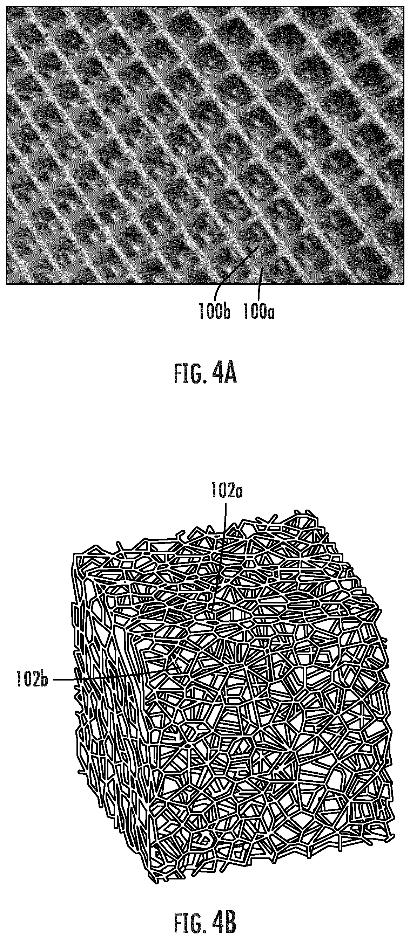

A condensing material having any suitable configuration is within the scope of the disclosure. For example, as shown in FIG. 4A, the condensing material may include at least one layer of screen-like material or mesh having small holes formed therein. In an embodiment, the condensing material of the at least one sidewall 48 includes a plurality of layers of screen-like material 100a, 100b arranged in an overlapping relationship. In embodiments where the condensing material includes a plurality of layers 100a, 100b, the layers may be substantially identical in configuration or may vary. For example, the size of the openings within each layer 100a, 100b of screen-like material may vary. Alternatively, or in addition, the openings of one of the layers of screen-like material 100a, 100b may be offset in one or more directions from an adjacent layer of screen-like material. In other embodiments, such as shown in FIG. 4B, the condensing material may include one or more layers of randomly structured material 102a, 102b having openings of varying sizes formed therein.

In another embodiment, the condensing material includes a plurality of wires 104 (see FIG. 3), such as grouped within one or more arrays for example. Although the wires 104 are illustrated as having a substantially linear configuration, embodiments where one or more wires 104 has another configuration, such as where the wires 104 have a spiral or helical configuration are also within the scope of the disclosure. It should be understood that the condensing materials and configurations thereof illustrated and described herein are intended as an example only and that any suitable material that allows a fluid such as air to flow therethrough may be used as a condensing material.

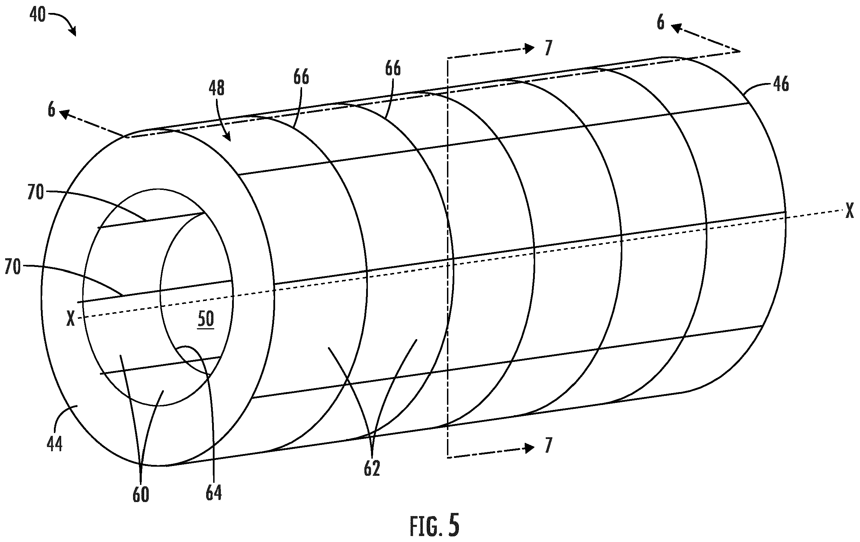

In other embodiments, one or more sidewalls 48 of the insert 40 are formed from a rigid material, including but not limited to steel, steel alloys, copper, aluminum, other metals or metal alloys, composites, nylon, polyester, rayon, or another suitable polymer or plastic material, or any combination thereof. In such embodiments, the sidewall 48 may include a plurality of discrete and fluidly separate flow passages or flow channels 60 through which the medium A moves. In the illustrated, non-limiting embodiment illustrated in FIGS. 5-7B, the plurality of discrete flow passages 60 are formed by one or more vanes. In some embodiments, the at least one vane includes a plurality of vanes, the plurality of vanes being distinct from one another and may but need not be identical in size and/or shape. Further, it should be appreciated that the vanes may be any suitable shape.

In an embodiment, the plurality of vanes includes at least one radial vane 62, and in some embodiments, a plurality of radial vanes 62. In embodiments including a plurality of radial vanes 62, adjacent radial vanes may be separated or spaced apart from one another. For example, the radial vanes 62 may be spaced along the longitudinal axis X of the insert 40. In such embodiments, the plurality of radial vanes 62 may extend over the entire axial length of the insert 40 or may extend over only a portion thereof. At least one flow passage 60 may therefore be defined between a pair of adjacent radial vanes 62.

Each radial vane 62 may have a first upstream end 64 arranged at or proximate to a center of the insert 40, and a second, downstream end 66 arranged at an exterior of the insert 40. In the illustrated, non-limiting embodiment, the first end 64 of each of the plurality of radial vanes 62 is arranged near a center of the insert 40, at a location offset from the central longitudinal axis X. As a result, the upstream end 64 of the plurality of radial vanes 62, in combination, define a hollow channel 68 that forms at least a portion of the interior 50 of the insert 40.

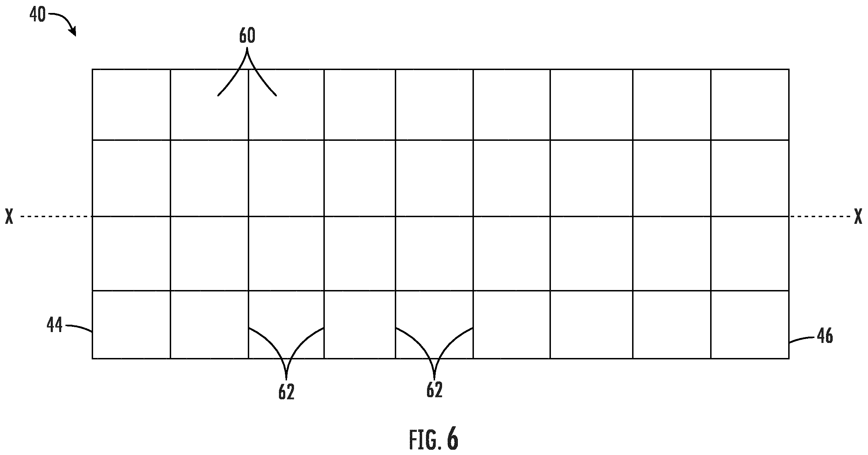

Alternatively, or in addition, the plurality of vanes may include at least one longitudinal vane 70. A longitudinal vane 70 may be oriented substantially parallel to the longitudinal axis X of the insert 40 and may be arranged at any peripheral position relative to the axis X. In the illustrated, non-limiting embodiment illustrated in FIGS. 5 and 6, a longitudinal vane 70 may extend over at least a portion of a length of the insert 40 defined between the first end 44 and the second end 46. For example, a longitudinal vane 70 may extend between and connect to a plurality of radial vanes 62, the plurality of radial vanes 62 may include only a portion of the radial vanes 62 of the insert 40, or alternatively, the entirety of the plurality of radial vanes 62.

The insert 40 may include any suitable number of radial vanes 62 and/or longitudinal vanes 70. Further the total number of vanes 62, 70 and the configuration of each of the vanes 62, 70 may be selected based on one or more of the following: the overall size of the radial vane 62 (between the inner diameter and the outer diameter of the insert), the orientation of the radial vane 62 relative to the longitudinal axis X, and the overall size of the hollow channel 68 defined at the center of the insert 40, the overall length of the insert 40, the axial length of the insert 40 about which radial vanes 62 are located, the axial length of the insert 40 about which longitudinal vanes 70 are located, and the orientation of a longitudinal vane 70 relative to the longitudinal axis X.

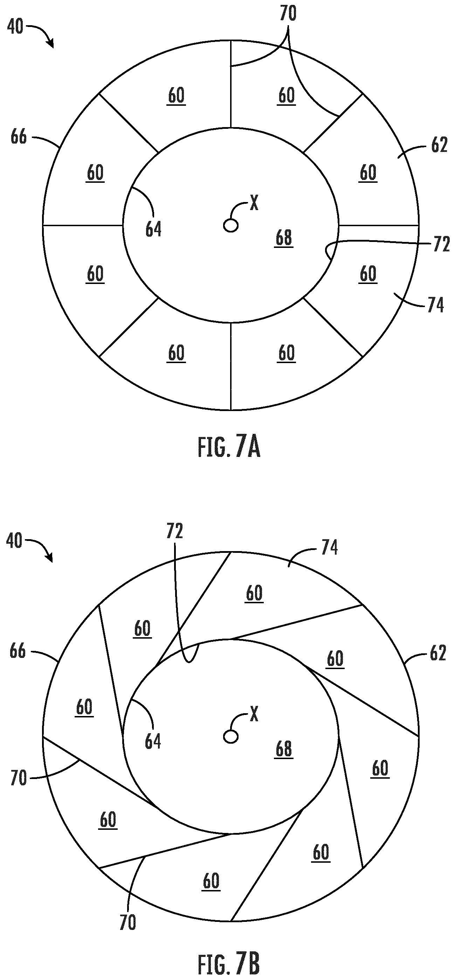

As previously noted, in an embodiment, the flow passages 60 may have a generally linear configuration, such as extending along an axis oriented perpendicular to the longitudinal axis X of the insert 40. In other embodiments, a swirl may be imparted to the medium A within one or more of the flow passages 60 of the insert 40. For example, in an embodiment, as shown in FIG. 7B, an inlet 72 of a flow passage 60 is rotationally offset from an outlet 74 of the corresponding flow passage 60 relative to a periphery of the insert 40. Accordingly, such a flow passage 60 is configured to twist about the central longitudinal axis X of the insert 40 resulting in a helical or spiral-like configuration. The flow passages 60 may twist about the longitudinal axis X any suitable amount between the upstream or inlet end 72 and the downstream or outlet end 74.

In the illustrated, non-limiting embodiment of FIG. 7B, an orientation of the at least one longitudinal vane 70 may be used to control the swirl of a flow passage 60. For example, a swirl may be achieved when the longitudinal vane 70 is arranged at a non-perpendicular angle relative to the longitudinal axis X. In embodiments where the flow passages 60 are configured to swirl about the longitudinal axis X, the plurality of longitudinal vanes 70 may be oriented at the same angle relative to the longitudinal axis X of the insert 40. However, embodiments where the angle varies between longitudinal vanes 70 are also within the scope of the disclosure.

In such embodiments, the flow of medium A within the flow passage 60 is configured to spin or rotate about the axis X of the insert. The direction of the spiral of the at least one flow passage 60 defined by the direction of the rotational offset between the inlet and outlet of the flow passage 60, may be the same as the spin acting on the medium A output from the turbine 24, or alternatively, may be in opposite the direction of the spin acting on the medium A output from the turbine 24. In embodiments where a plurality of the flow passages 60 have a spiral-like configuration, it should be appreciated that the circumferential distance of the spiral about the central axis X applied to flow passages 60 may vary.

Because of the radial orientation of the sidewall 48 of the insert 40 relative to the flow of medium A, the outer periphery of the insert 40 at the at least one sidewall 48 is greater than the inner periphery of the insert 40 at the at least one sidewall 48. Accordingly, in an embodiment, such as embodiments where the radial vanes 62 have a substantially planar configuration and are oriented perpendicular to the longitudinal axis X of the insert 40, a cross-sectional area of the flow passage 60 may increase between an inlet 72 and an outlet 74 of a respective flow passage 60. However, in other embodiments, the radial vanes 62 and/or longitudinal vanes 70 may be contoured to maintain a constant cross-sectional area of a flow passage 60 over its length. It should be understood that a sidewall 48 having a plurality of fluidly distinct flow passages 60 as illustrated and described herein is intended as an example only and that a sidewall having any suitable construction is within the scope of the disclosure. For example, in an embodiment, a clearance (not shown) may be formed between adjacent flow passages 60 formed in the sidewall, and the clearance may be constant or may vary over the length of the flow passage 60.

In operation, as the flow of medium A output from a component, such as the turbine outlet of turbine 24 for example, passes into the hollow interior 50 of the insert 40, the flow A is redirected radially outwardly, through the at least one sidewall 48. As the flow passes through the condensing material or the plurality of flow passages 60 of the sidewall 48, the moisture within the medium A will coalesce in the form of droplets on the surfaces of the condensing material and/or flow channels 60, such as on the surfaces of the radial and/or longitudinal vanes 62, 70 for example. During this coalescing, the flow of medium A may cause these formed droplets to move through the coalescing material or flow passages 60 and into the water collector 34 positioned directly downstream from the water separator 32. The water collector 34 may further separate a flow of medium A having water entrained therein from a central drier flow of medium as is known in the art.

In other embodiments, such as shown in FIG. 3, the need for a separate water collector 34 arranged downstream from the water separator 32 may be eliminated. As shown, a drain 110 may be arranged at a bottom of the duct 38, at a position vertically beneath the insert 40. As the water droplets coalesce and accumulate on the condensing material or on the surfaces of the flow passages 60, the water droplets will eventually become large enough such that the gravitational force acting thereon draws the water downwardly, through the sidewall 48 to the bottom of the duct 38.

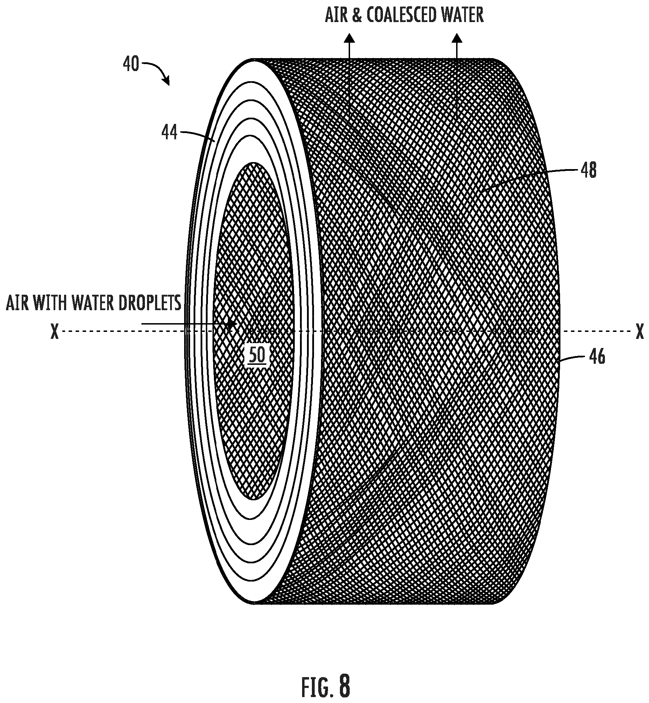

With reference now to FIG. 8, in an embodiment, the insert 40 may be movable, for example rotatable, within the interior of the duct 38. In the illustrated, non-limiting embodiment, the insert 40 is rotatable about the longitudinal axis X. The insert 40 may be mounted within the duct 38 via any suitable mounting mechanism and rotation of the insert may be driven by a motor, by the upstream turbine, or alternatively, by the flow of air A.

In such embodiments, as previously described, droplets of water coalesce on the condensing material 114 as the flow of medium A" passes therethrough. Further, by rotating the insert 40 about its longitudinal axis, a centrifugal force is applied to the water droplets. This centrifugal force causes the droplets to separate from the material of the sidewall, such as the flow passages 60 or condensing material. The droplets may be projected radially outwardly, such as into contact with an interior surface 39 the duct 38 adjacent to the insert 40. As previously described, a drain 110 may be integrated into the duct 38 adjacent to the insert 40 such that any of the water in contact with the interior surface 39 of the duct 38 may fall via gravity to the drain 110 for removal from the system. From the drain 110, the water can be exhausted overboard, or alternatively, can be redirected to another component of the ECS 20, or alternatively, to another system or component of the aircraft.

A water separator 32 including a coalescing insert 40 as illustrated and described herein facilitates the separation of water from a flow of medium A. The water separator 32 may be particularly useful for removing water from a flow of medium A when the water is in the form or a mist or fog, such as may be received from an outlet of a turbine. Further, by using the water separator 32 in an ECS 20 having two turbines 24, 36 arranged in series relative to the flow of medium A, the first turbine 24 may be configured to maintain the temperature of the medium A above freezing, whereas the second turbine 36 may be configured to achieve a necessary pressure and/or temperature of the medium to be provided to a load.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made that fall within the scope of the invention as defined by the claims. In addition, many modifications may be made to adapt a particular situation or material to the teachings of the present disclosure without departing from the scope of the claims. Therefore, it is intended that the present invention not be limited to the particular embodiment disclosed as the best mode contemplated for carrying out this present invention, but that the present invention will include all embodiments falling within the scope of the claims.

## Claims

1. A water separator for use in an environmental control system comprising:
an insert (40) having an open first end (44), a closed second end (46), and at least one sidewall (48) extending between the first end and the second end such that a hollow interior (50) is defined between the first end, the second end, and the at least one sidewall, wherein the at least one sidewall includes at least one flow passage (60) such that a flow of medium is configured to flow radially from the interior of the insert through the at least one sidewall.

2. The water separator of claim 1, wherein the at least one sidewall (48) is formed from a condensing material.

3. The water separator of claim 2, wherein the condensing material includes a plurality of wires (104), or wherein the condensing material includes at least one layer of a screen-like material (100a, 100b).

4. The water separator of any preceding claim, wherein the at least one flow passage (60) includes a plurality of discrete flow passages extending between the interior of the insert and an exterior of the insert.

5. The water separator of claim 4, wherein the plurality of discrete flow passages are formed by a plurality of vanes.

6. The water separator of claim 5, wherein the insert has a longitudinal axis and the plurality of vanes includes at least one of a radial vane extending between the interior and the exterior of the insert and at least one longitudinal vane extending between the first end and the second end of the insert.

7. The water separator of claim 4, 5 or 6, wherein a cross-sectional area of at least one flow passage of the plurality of discrete flow passages varies over a length of the at least one flow passage, or wherein a cross-sectional area of at least one flow passage of the plurality of discrete flow passages is constant over a length of the at least one flow passage.

8. The water separator of any of claims 4 to 7, wherein each of the plurality of discrete flow passages has an inlet (72) and an outlet (74), and the inlet of at least one of the plurality of discrete flow passages is radially aligned with the outlet of the at least one of the plurality of discrete flow passages, or wherein each of the plurality of discrete flow passages has an inlet and an outlet, and the inlet of at least one of the plurality of discrete flow passages and the outlet of the at least one of the plurality of discrete flow passages are separated by a rotational offset.

9. The water separator of claim 8, second alternative, wherein a direction of the rotational offset of the at least one flow passage about a longitudinal axis of the insert and a direction of a spin of the flow of medium provided to the first end of the insert is the same, or wherein a direction of the rotational offset of the at least one flow passage about a longitudinal axis of the insert and a direction of a spin of the flow of medium provided to the first end of the insert is different.

10. The water separator of any preceding claim, wherein the second end of the insert includes an end wall (52) having an outer diameter equal to an outer diameter of the at least one sidewall.

11. The water separator of claim 10, wherein the end wall has a sloped configuration to direct the flow of medium within the interior radially outwardly toward the at least one sidewall, or wherein the end wall includes a conical section, the conical section extending into the interior of the insert, wherein a narrow end of the conical section is positioned closest to the first end of the insert.

12. The water separator of any preceding claim, further comprising a duct (38), the insert being mounted within the duct.

13. The water separator of claim 12, wherein the duct includes a first portion having a first diameter and a second portion having a second diameter, the second diameter being larger than the first diameter and the insert being arranged within the second portion.

14. The water separator of claim 13, wherein an outer diameter of the insert is greater than the first diameter.

15. The water separator of any preceding claim, wherein the insert has a longitudinal axis extending between the first end and the second end, the insert being rotatable about the longitudinal axis.
